# EUROPÄISCHE PATENTSCHRIFT

(11) **EP 1 644 227 B1**
(45) Veröffentlichungstag und Bekanntmachung des Hinweises auf die Patenterteilung: **02.01.2008**
(21) Anmeldenummer: 04766097.2
(22) Anmeldetag: 29.06.2004
(51) Int. Cl.: B60R 22/48

(54) **SICHERHEITSGURT-WARNVORRICHTUNG**
SEAT-BELT WARNING DEVICE
DISPOSITIF D'AVERTISSEMENT POUR CEINTURE DE SECURITE

(30) Priorität: 15.07.2003 EP 03102173
(43) Veröffentlichungstag der Anmeldung: 12.04.2006
(73) Patentinhaber: IEE INTERNATIONAL ELECTRONICS & ENGINEERING S.A., 6468 Echternach (LU)
(72) Erfinder: BECKER, Guido, 66679 Losheim am See (DE); MOUSEL, Thierry, L-5637 Mondorf (LU); SCHOCKMEL, Paul, L-8216 Mamer (LU)
(74) Vertreter: Beissel, Jean
(86) Internationale Anmeldenummer: PCT/EP2004/051287
(87) Internationale Veröffentlichungsnummer: WO 2005/007468

(56) Entgegenhaltungen:
- US-A- 5 845 000
- US-A1- 2003 014 166
- US-B1- 6 239 695

## Beschreibung

### Einleitung

Die vorliegende Erfindung betrifft eine Sicherheitsvorrichtung für ein Fahrzeug und insbesondere eine Sichefieitsgurt-Warnvorrichtung.

Es ist allseits bekannt, dass das Tragen des Sicherheitsgurtes die Sicherheit von Fahrzeugpassagieren erheblich erhöht und die Folgen eines Unfalls deutlich verringern kann. Allerdings werden vorhandene Sicherheitsgurte häufig, bewusst oder unbewusst, nicht vorschriftsmäßig angelegt. Dies ist insbesondere auf den Rücksitzen des Fahrzeugs der Fall.

Um die Insassen eines Fahrzeugs zum Anlegen der vorhandenen Sicherheitsgurte zu bewegen ist man folglich dazu übergegangen, Fahrzeuge mit Wamsystemen auszustatten, die bei nicht angelegtem Sicherheitsgurt ein Warnsignal an den jeweiligen Passagier und/oder den Fahrer ausgeben. Die Warnsignale sollen bei solchen Warnvorrichtungen selbstverständlich nur dann ausgegeben werden, wenn die jeweiligen Sitze durch einen Passagier belegt sind. Demzufolge muss eine solche Sicherheitsgurt-Warnvorrichtung einerseits eine Vorrichtung zum Ermitteln des Belegungszustands des Sitzes und andererseits eine Vorrichtung zum Erkennen eines Anlegezustands des zugeordneten Sicherheitsgurts aufweisen.

Das US Patent US 6,239,695 B1 beschreibt beispielsweise ein Sicherheitsgurt-Warnsystem mit jeweils einem Sitzbelegungssensor und einem Gurtschloss-Sensor. Der Sitzbelegungssensor umfasst einen druckempfindlichen Folienschalter, der in einer Sitzfläche des zu überwachenden Sitzes derart angeordnet ist, dass der druckempfindliche Folienschalter ausgelöst wird, wenn der Sitz belegt ist. Der Gurtschloss-Sensor weist einen in dem Gurtschloss angeordneten Schalter auf, der beim Einführen der Gurtschnalle in das Gurtschloss geschaltet wird.

Der Nachteil einer solchen Vorrichtung liegt in der verhältnismäßig aufwendigen Verkabelung der Sitzbelegungssensoren. Diese notwendige Verkabelung der in den Sitz integrierten Sensoren stellt insbesondere bei variablen Rücksitzkonfigurationen mit herausnehmbaren Sitzen ein Problem dar.

### Aufgabe der Erfindung

Aufgabe der vorliegenden Erfindung ist es folglich, eine verbesserte Sicherheitsgurt-Warnvorrichtung vorzuschlagen.

### Allgemeine Beschreibung der Erfindung

Diese Aufgabe wird durch eine Sicherheitsgurt-Warnvorrichtung nach Anspruch 1 gelöst. Eine solche Sicherheitsgurt-Warnvorrichtung umfasst eine Vorrichtung zum Erfassen einer Belegung eines Sitzes durch einen Passagier, eine Vorrichtung zum Erfassen eines Anlegezustands eines dem Sitz zugeordneten Sicherheitsgurt, und eine Vorrichtung zur Ausgabe eines Warnsignals. Erfindungsgemäß umfasst die Vorrichtung zum Erfassen einer Belegung des Sitzes durch einen Passagier ein optisches bildgebendes System mit einer Bildauswerteeinheit.

Im Gegensatz zu den aus dem Stand der Technik bekannten Sitzbelegungssensoren wird das optische bildgebende System der vorgeschlagenen Wamvorrichtung nicht in die zu überwachenden Fahrzeugsitze integriert. Somit stellt sich bei der vorgeschlagenen Warnvorrichtung das Problem der Verkabelung beim Ein- bzw. Ausbau eines Sitzes nicht mehr. Die Anordnung der Warnvorrichtung steht demzufolge einem modularen Aufbau beispielsweise einer Rücksitzanordnung in einem Fahrzeug nicht entgegen.

Das optische System kann im Inneren des Fahrzeugs an einer beliebigen Stelle derart integriert werden, dass der oder die zu überwachenden Sitze in dem Blickfeld des Systems liegen. Dabei ist anzumerken, dass mit einem einzigen optischen System bei geeigneter Ausgestaltung der Optikkomponenten mehrere Sitze durch ein einziges bildgebendes System erfasst werden können. Hierdurch ergibt sich gegenüber dem Stand der Technik, bei dem jeder Einzelsitz bzw. jeder einzelne Sitzbereich einer Rücksitzbank mit einem Sitzbelegungssensor ausgestattet werden muss, bei der vorgeschlagenen Wamvorrichtung ein wirtschaftlicher Vorteil.

In einer einfachen Ausgestaltung der Erfindung kann das optische System beispielsweise in dem Fahrzeughimmel integriert sein. Mit einem derart angeordneten optischen System lässt sich beispielsweise der gesamte hintere Bereich des Fahrzeugs gut erfassen, so dass eine zuverlässige Sitzbelegungserkennung für sämtliche hinteren Plätze des Fahrzeugs erfolgen kann. Es ist anzumerken, dass mit dem vorgeschlagenen System auch eine Sitzbelegung zwischen den eigentlichen Sitzplätzen erkannt werden kann.

Ein weiterer Vorteil des vorgeschlagenen Systems gegenüber dem Stand der Technik liegt darin, dass durch eine geeignete Bildauswertung eine Unterscheidung zwischen einem Objekt und einer Person erfolgen kann. Dies ermöglicht eine Klassifizierung der Sitzbelegung und demzufolge eine situationsabhängige Ausgabe eines Warnsignals nur dann, wenn der Sitz tatsächlich durch eine Person belegt ist. Eine Ausgabe eines Warnsignals im Fall einer Sitzbelegung durch einen Gegenstand kann hierdurch wirksam vermieden werden.

Es ist anzumerken, dass die Bildauswerteeinheit in der optischen Einheit integriert sein kann oder mit dieser über eine Schnittstelle verbunden sein. Im letzteren Fall ist der Raumbedarf des optischen Systems reduziert so dass eine Integration in das Fahrzeug vereinfacht wird. Die Auswerteeinheit selbst kann dann an einer beliebigen Stelle im Fahrzeug untergebracht werden.

Die Bildauswerteeinheit und die Vorrichtung zum Erfassen eines Anlegezustands eines dem Sitz zugeordneten Sicherheitsgurt sind mit einer Steuereinheit verbunden, die bei einer tatsächlichen Sitzbelegung und bei nicht angelegtem Sicherheitsgurt die Vorrichtung zur Ausgabe eines Warnsignals ansteuert um ein optisches und/oder akustisches Warnsignal an den Fahrer und/oder den betreffenden Passagier auszugehen.

Gemäß der Erfindung wertet die Bildauswerteeinheit ein von dem bildgebenden System aufgenommenes Situationsbild anhand der darin enthaltenen Konturen und/oder Kanten aus. Die Kantenermittlung kann durch Standardbildbearbeitungsverfahren erfolgen. Anhand der ermittelten Kantenermittlung kann durch Standardbildbearbeitungsverfahren erfolgen. Anhand der ermittelten Kanten ist eine Unterscheidung zwischen verschiedenen Sitzbelegungszuständen leicht zu bewerkstelligen. Darüber hinaus ermöglicht die Lage der ermittelten Kanten bzw. Konturen im überwachten Raum eine Bestimmung der Position eines Passagiers beispielsweise bezüglich eines Gurt-Schlosses. Der Vorteil der Reduzierung des Bildinhalts auf die vorhandenen Kanten bzw. Konturen liegt in der Reduzierung der zu bearbeitenden Datenmenge.

In einer bevorzugten Ausgestaltung weist das bildgebende System eine CMOS Kamera und/oder eine CCD Kamera auf. Diese Systeme zeichnen sich durch eine gute Auflösung bei gleichzeitig geringen Anschaffungskosten aus.

Die Vorrichtung zum Erfassen des Anlegezustands des Sicherheitsgurts kann beispielsweise einen Gurtschlosssensor umfassen. Eine Ausgestaltung eines solchen Sensors ist aus dem oben angeführten Stand der Technik bekannt. Es handelt sich beispielsweise um einen in das Gurtschloss integrierten Schalter, der beim Einführen der Sicherheitsgurtlasche in das Gurtschloss aktiviert wird.

In einer besonders bevorzugten Ausgestaltung der Erfindung wird die Vorrichtung zum Erfassen des Anlegezustands des Sicherheitsgurts jedoch durch das optische bildgebende System ausgebildet. In der Tat ist es bei genügend guter Auflösung des optischen Systems möglich, die Lage eines Sicherheitsgurts optisch zu bestimmen und demzufolge festzustellen, ob der Gurt angelegt ist oder nicht. Eine solche Ausgestaltung der Erfindung kann demnach auf eigenständige Gurtsensoren verzichten. Hierdurch reduziert sich einerseits die Zahl der Einzelkomponenten des Systems, andererseits wird der Einbau des Systems in ein Fahrzeug wesentlich vereinfacht.

Um eine optische Einkennung der Lage des Sicherheitsgurtes zu vereinfachen, kann der Gurt gegebenenfalls eine oder mehrere von dem optischen System erkennbare Markierungen aufweisen.

Es ist anzumerken, dass die vorgeschlagene Vorrichtung je nach Empfindlichkeit des optischen Systems mit einer Beleuchtungsvorrichtung ausgestattet sein kann, die es erlaubt, den zu überwachenden Raum bei ungenügender Umgebungslichtstärke geeignet auszuleuchten. Die Beleuchtungseinheit kann dabei vorzugsweise in einem für den Passagier nicht sichtbaren Bereich erfolgen, z.B. im IR Bereich.

Zusammenfassend ist festzuhalten, dass die vorgeschlagene Wamvorrichtung eine sehr genaue Klassifizierung der Sitzbelegung der überwachten Sitze ermöglicht und somit ein situationsabhängiges Warnsignal nur dann ausgibt, falls die momentane Belegungssituation ein Anlegen des Sicherheitsgurtes tatsächlich erfordert. Die erfolgte Klassifizierung der Sitzbelegung kann dabei auch zur Steuerung weiterer Anwendungen benutzt werden. So können beispielsweise elektrische Kopfstützen automatisch eingefahren werden, wenn die Fondssitze eines Fahrzeugs nicht belegt sind. Ebenso können Kopfstützen bei einer erkannten Belegung durch eine Person auf eine für die Statur des Passagiers geeignete Höhe eingestellt werden.

Die Daten bezüglich der Sitzbelegung können auch in Notfallsystemen verwendet werden, um beispielsweise bei einem Unfall automatisch die Zahl der in dem Fahrzeug befindlichen Passagiere an eine Notfallzentrale zu melden. Außerdem können die Daten in einem Fahrzeugdatenschreiber gespeichert werden, um bei einer späteren Unfallauswertung verwendet zu werden.

Es ist anzumerken, dass bei einer solchen Speicherung der Sitzbelegungsdaten die Speicherung lediglich der Kanteninformationen einerseits den Vorteil aufweist. Andererseits ist bei der Speicherung der Kanteninformationen eine Identifizierung der in dem Fahrzeug befindlichen Passagiere nicht möglich, so dass eventuelle Datenschutzbestimmungen eingehalten werden können.

Im folgenden wird eine mögliche Anordnung des optischen Systems der vorliegenden Erfindung innerhalb eines Fahrzeugs anhand der beiliegenden Figuren kurz beschrieben. Es zeigen:
- Fig.1:: eine Seitenansicht eines Fahrzeugs mit einer Sicherheitsgut-Warnvorrichtung
- Fig.2:: eine Draufsicht auf das Fahrzeug der Fig.1.

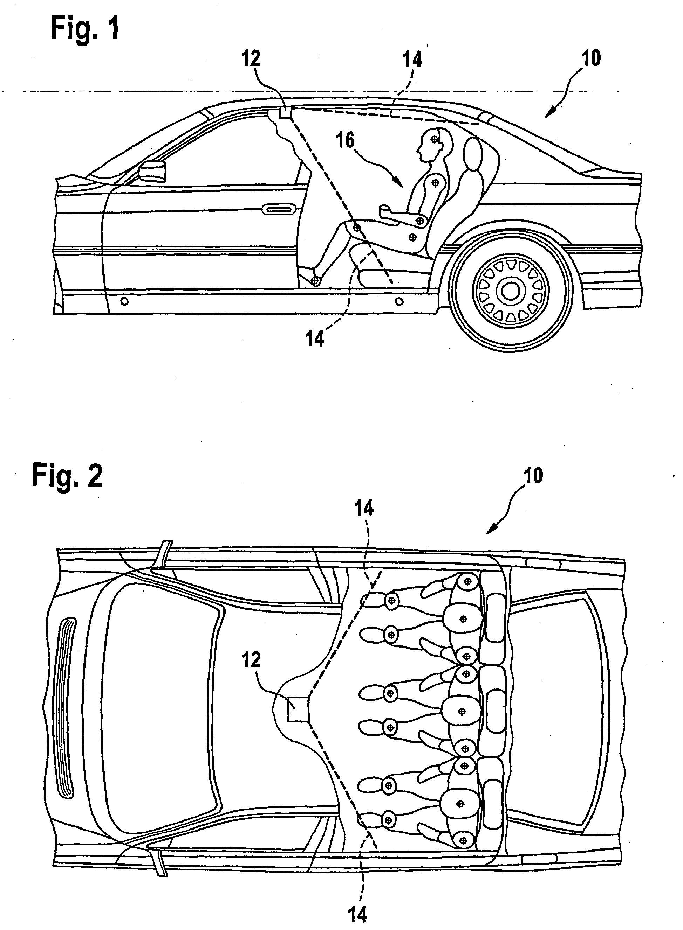

Die Fig. 1 zeigt eine Seitenansicht eines Fahrzeugs 10 mit einem in dem Fahrzeughimmel angeordneten optischen System 12. Das optische System, beispielsweise eine CCD-Kamera oder eine CMOS-Kamera ist derart in dem Fahrzeug angeordnet, dass das Sichtfeld der Kamera (durch die gestrichelten Linien 14 angedeutet) den gesamten Rücksitzbereich des Fahrzeugs überdeckt. Ein in dem Rücksitz einsitzende Person 16 wird demnach von der Kamera 12 erfasst und kann von einer nicht dargestellten Bildauswerteeinheit in den von der Kamera aufgenommenen Situationsbildern erkannt werden. Wird darüber hinaus erkannt, dass die Person den Sicherheitsgurt nicht angelegt hat, wird ein geeignetes Warnsignal ausgegeben.

In der Fig. 2 ist eine Draufsicht des Fahrzeugs 10 dargestellt. Man erkennt, dass durch eine entsprechende Ausgestaltung des optischen Systems der Sichtbereich 14 der Kamera 12 derart aufgeweitet ist, dass der gesamte Fondsbereich des Fahrzeugs durch eine einzige Kamera überwachbar ist.

## Patentansprüche

1. Sicherheitsgurt-Warnvorrichtung umfassend
eine Vorrichtung zum Erfassen einer Belegung eines Sitzes durch einen Passagier,
eine Vorrichtung zum Erfassen eines Anlegezustands eines dem Sitz zugeordneten Sicherheitsgurt, und
eine Vorrichtung zur Ausgabe eines Warnsignals,
**dadurch gekennzeichnet, dass** die Vorrichtung zum Erfassen einer Belegung des Sitzes durch einen Passagier ein optisches bildgebendes System zur Aufnahme von Situationsbildern und eine Bildauswerteeinheit zur Auswertung der aufgenommenen Situationsbilder umfasst, wobei die Bildauswerteeinheit die von dem bildgebenden System aufgenommenes Situationsbilder anhand der darin enthaltenen Konturen und/oder Kanten auswertet.

2. Sicherheitsgurt-Warnvorrichtung nach Anspruch 1, wobei das bildgebende System eine CMOS Kamera und/oder eine CCD Kamera umfasst.

3. Sicherheitsgurt-Warnvorrichtung nach einem der Ansprüche 1 bis 2, wobei die Vorrichtung zum Erfassen des Anlegezustands des Sicherheitsgurts einen Gurtschlosssensor umfasst

4. Sicherheitsgurt-Warnvorrichtung nach einem der Ansprüche 1 bis 2, wobei die Vorrichtung zum Erfassen des Anlegezustands des Sicherheitsgurts durch das optische bildgebende System ausgebildet wird.

5. Sicherheitsgurt-Warnvorrichtung nach Anspruch 4, wobei der Sicherheitsgurt eine oder mehrere von dem optischen System erkennbare Markierungen aufweist.

6. Sicherheitsgurt-Warnvorrichtung nach einem der Ansprüche 1 bis 5, bei das optische bildgebende System eine Beleuchtungsvorrichtung zum leuchten des zu überwachenden Raums umfasst.

7. Verfahren zum Warnen eines Autoinsassen umfassend:
das Erfassen einer Belegung eines Sitzes durch einen Passagier,
das Erfassen eines Anlegezustands eines dem Sitz zugeordneten Sicherheitsgurt, und
die Ausgabe eines Warnsignals,
**dadurch gekennzeichnet, dass** das Erfassen einer Belegung des Sitzes durch einen Passagier die Aufnahme von Situationsbildern durch ein optisches bildgebendes System und die Auswertung der aufgenommenen Situationsbilder durch eine Bildauswerteeinheit umfasst, wobei die Auswertung der aufgenommenen Situationsbilder durch die Bildauswerteeinheit anhand der in den aufgenommenen Situationsbildern enthaltenen Konturen und/oder Kanten erfolgt.

8. Verfahren nach Anspruch 7, wobei die Aufnahme von Situationsbildern durch eine CMOS Kamera und/oder eine CCD Kamera erfolgt.

9. Verfahren nach einem der Ansprüche 7 bis 8, wobei das Erfassen des Anlegezustands des Sicherheitsgurts durch einen Gurtschlosssensor erfolgt

10. Verfahren nach einem der Ansprüche 7 bis 8, wobei das Erfassen des Anlegezustands des Sicherheitsgurts durch das optische bildgebende System erfolgt.

11. Verfahren nach Anspruch 10, wobei wobei das Erfassen des Anlegezustands des Sicherheitsgurts das Erkennen einer oder mehrerer Markierungen am Sicherheitsgurt umfasst.

12. Verfahren nach einem der Ansprüche 7 bis 11, umfassend das Ausleuchten des zu überwachenden Raums durch eine Beleuchtungsvorrichtung des optischen bildgebenden Systems.

## Claims

1. Seat-belt warning device comprising
a device for sensing whether a seat is occupied by a passenger,
a device for sensing whether a seat belt associated with the seat has been put on, and
a device for outputting a warning signal,
**characterized in that** the device for sensing whether the seat is occupied by a passenger comprises an optical imaging system for recording situation images and an image evaluation unit for evaluating the situation images which have been recorded, the image evaluation unit evaluating the situation images, which have been recorded by the imaging system, using the contours and/or edges contained in said images

2. Seat-belt warning device according to Claim 1, the imaging system comprising a CMOS camera and/or a CCD camera

3. Seat-belt warning device according to Claim 1 or 2, the device for sensing whether the seat belt has been put on comprising a belt lock sensor

4. Seat-belt warning device according to Claim 1 or 2, the device for sensing whether the seat belt has been put on being formed by the optical imaging system

5. Seat-belt warning device according to Claim 4, the seat belt having one or more markings which can be detected by the optical system

6. Seat-belt warning device according to one of Claims 1 to 5, the optical imaging system comprising a lighting device for illuminating the space which is to be monitored.

7. Method for warning a vehicle occupant, comprising:
sensing whether a seat is occupied by a passenger,
sensing whether a seat belt associated with the seat has been put on, and
outputting a warning signal,
**characterized in that** the operation of sensing whether the seat is occupied by a passenger comprises recording situation images using an optical imaging system and evaluating the situation images which have been recorded using an image evaluation unit, the evaluation of the situation images which have been recorded being affected by the image evaluation unit using the contours and/or edges contained in the situation images which have been recorded.

8. Method according to Claim 7, the recording of situation images being affected by a CMOS camera and/or a CCD camera.

9. Method according to Claim 7 or 8, the sensing whether the seat belt has been put on being affected by a belt lock sensor

10. Method according to Claim 7 or 8, the sensing whether the seat belt has been put on being affected by the optical imaging system

11. Method according to Claim 10, the sensing whether the seat belt has been put on comprising the detection of one or more markings on the seat belt

12. Method according to one of Claims 7 to 11, comprising illuminating the space which is to be monitored by an illumination device of the optical imaging system

## Revendications

1. Dispositif d'avertissement pour ceinture de sécurité, comprenant
un dispositif de détection d'une occupation d'un siège par un passager,
un dispositif de détection d'un état de mise d'une ceinture de sécurité associée au siège, et
un dispositif de sortie d'un signal d'avertissement,
**caractérisé en ce que** le dispositif de détection d'une occupation du siège par un passager comprend un système optique générant des images pour la prise d'images de situation et une unité d'évaluation d'images pour l'évaluation des images de situation prises, l'unité d'évaluation d'images évaluant les images de situation prises par le système générant des images à l'aide des contours et/ou des bords y contenus

2. Dispositif d'avertissement pour ceinture de sécurité selon la revendication 1, le système générant des images comprenant une caméra CMOS et/ou une caméra CCD.

3. Dispositif d'avertissement pour ceinture de sécurité selon l'une quelconque des revendications 1 à 2, le dispositif de détection de l'état de mise de la ceinture de sécurité comprenant un capteur de fermoir de ceinture

4. Dispositif d'avertissement pour ceinture de sécurité selon l'une quelconque des revendications 1 à 2, le dispositif de détection de l'état de mise de la ceinture de sécurité étant formé par le système optique générant des images

5. Dispositif d'avertissement pour ceinture de sécurité selon la revendication 4, la ceinture de sécurité présentant un ou plusieurs marquages identifiables par le système optique

6. Dispositif d'avertissement pour ceinture de sécurité selon l'une quelconque des revendications 1 à 5, le système optique générant des images comprenant un dispositif d'éclairage pour éclairer l'espace à surveiller

7. Procédé d'avertissement d'un passager d'une automobile, comprenant :
la détection d'une occupation d'un siège par un passager,
la détection d'un état de mise d'une ceinture de sécurité associée au siège, et
la sortie d'un signal d'avertissement,
**caractérisé en ce que** la détection d'une occupation du siège par un passager comprend la prise d'images de situation par un système optique générant des images et l'évaluation par une unité d'évaluation des images de situation prises, l'évaluation par l'unité d'évaluation des images de situation prises étant effectuée à l'aide des contours et/ou bords qui y sont contenus

8. Procédé selon la revendication 7, la prise d'images de situation étant effectuée par une caméra CMOS et/ou une caméra CCD

9. Procédé selon l'une quelconque des revendications 7 à 8, la détection de l'état de mise de la ceinture de sécurité étant effectuée par un capteur de fermoir de ceinture

10. Procédé selon l'une quelconque des revendications 7 à 8, la détection de l'état de mise de la ceinture de sécurité étant effectuée par un système optique générant des images

11. Procédé selon la revendication 10, la détection de l'état de mise de la ceinture de sécurité comprenant l'identification d'un ou de plusieurs marquages sur la ceinture de sécurité

12. Procédé selon l'une quelconque des revendications 7 à 11, comprenant l'éclairage de l'espace à surveiller par un dispositif d'éclairage du système optique générant des images
